(19) **Europäisches Patentamt**

**European Patent Office**

**Office européen des brevets**

(11) **EP 1 533 800 A2**

(12) **EUROPEAN PATENT APPLICATION**

(43) Date of publication:
25.05.2005 Bulletin 2005/21

(51) Int Cl.$^7$: **G11B 7/135**

(21) Application number: **04257020.0**

(22) Date of filing: **12.11.2004**

| | |
|---|---|
| (84) Designated Contracting States: **AT BE BG CH CY CZ DE DK EE ES FI FR GB GR HU IE IS IT LI LU MC NL PL PT RO SE SI SK TR** Designated Extension States: **AL HR LT LV MK YU** | (72) Inventors: • **Ikenaka, Kiyono c/o Konica Minolta Opto, Inc Hachioji-shi Tokyo 192-8505 (JP)** • **Kurogama, Tatsuji c/o Konica Minolta Opto, Inc Hachioji-shi Tokyo 192-8505 (JP)** |
| (30) Priority: **14.11.2003 JP 2003385029 30.09.2004 JP 2004288053** | (74) Representative: **Nicholls, Michael John J.A. KEMP & CO. 14, South Square Gray's Inn London WC1R 5JJ (GB)** |
| (71) Applicant: **Konica Minolta Opto, Inc. Hachioji-shi, Tokyo 192-8505 (JP)** | |

(54) **Optical pickup device and optical pickup system using the same**

(57) An optical pickup device includes an objective optical element (OBJ) through which light fluxes respectively with wavelengths λ1, λ2 and λ3 pass and a divergent angle-converting element (OC) that causes light fluxes respectively with wavelengths λ1, λ2 and λ3 to pass through and causes at least a light flux with wavelength λ1 to emerge as a parallel light. A position of the divergent angle-converting element in the optical axis direction varies in the case of using the optical pickup apparatus depending on the occasion when a light flux with wavelength λ1 or λ2 passes through or on the occasion when a light flux with wavelength λ3 passes through.

FIG. 1

Printed by Jouve, 75001 PARIS (FR)

**Description**

**RELATED APPLICATION**

This application is based on patent application No. 2003-385029 and No.2004-288053 filed in Japan, the entire content of which is hereby incorporated by reference.

**BACKGROUND**

1. Field of the invention

The present invention relates to an optical pickup apparatus and an optical element used for the optical pickup apparatus.

2. Description of the related art

There has recently been studied and developed the so-called high density optical disc wherein a blue laser beam having a wavelength of about 400 nm is used to enhance recording density of an optical information recording medium (optical disc) and thereby to enlarge its storage capacity.

As a standard of the high density optical disc, there are known, for example, the one wherein numerical aperture (NA) of an objective lens on the image side is about 0.85, and a protective layer thickness is about 0.1 mm and the one wherein NA and the protective layer thickness are controlled to be about 0.65 and about 0.6 mm respectively which are similar to those in conventional DVD (digital versatile disc). In the explanation below, the high density optical disc wherein NA is about 0.65 and a protective layer thickness is about 0.6 mm is indicated as "AOD (Advanced Optical Disc)".

There have been proposed various technologies relating to an optical pickup apparatus having compatibility between the high density optical disc and optical discs which have been used widely such as DVD or CD (compact disc).

Incidentally, wavelengths $\lambda 1$, $\lambda 2$ and $\lambda 3$ of light fluxes used respectively for AOD, DVD and CD are about 400 nm, about 650 nm and about 780 nm respectively, and protective layer thicknesses t1, t2 and t3 are respectively about 0.6 mm, about 0.6 mm and about 1.2 mm.

In order to attain compatibility among those plural types of optical discs, while securing an amount of light of a light flux used for each optical disc,it is necessary to correct aberrations caused by a difference in wavelengths or by a difference in protective layer thicknesses, and there is disclosed a technology for providing a diffractive structure on an optical surface of an optical element that constitutes an optical pickup apparatus (for example, see Patent Document 1).

The invention disclosed in the Patent Document 1 is an optical pickup apparatus having compatibility between a high density optical disc and DVD or compatibility among a high density optical disc, DVD and CD, wherein chromatic aberration of the high density optical disc is corrected by combining a diffractive optical element and an objective lens.

(Patent Document 1) TOKKAI No. 2001-60336

However, when it is designed a diffractive structure so that appropriate diffractive functions be given for a light flux having wavelength $\lambda 1$,by causing wavelength $\lambda 3$ to be about twice as long as $\lambda 1$ as stated above,it is not possible to give appropriate diffractive functions for the light flux having wavelength $\lambda 3$, and spherical aberration caused by a difference between protective layer thickness t1 and protective layer thickness t3 has not always been corrected sufficiently.

**SUMMARY**

In view of the problems mentioned above, an object of the invention is to provide an optical pickup apparatus which has compatibility for at least three types of recording media each having a different storage capacity and corrects spherical aberration caused by a difference between protective layer thicknesses, and in particular, has compatibility for AOD, DVD and CD, and corrects spherical aberration caused by a protective layer thickness difference between AOD and CD, and to provide an optical system used for the aforementioned optical pickup apparatus.

(1) An optical pickup apparatus comprising;
a first light source emitting a light flux having a wavelength $\lambda 1$ for recording and/or reproducing information for a first optical information recording medium having protective layer thickness t1,

a second light source emitting a light flux having a wavelength λ2 (λ1 < λ2) for recording and/or reproducing information for a second optical information recording medium having protective layer thickness t2 (0.8t1 ≤ t2 ≤ 1.2t1),

a third light source emitting a light flux having a wavelength λ3 (1.6 λ1 ≤ λ3 < 2λ1, λ2 < λ3) for recording and/or reproducing information for a third optical information recording medium having protective layer thickness t3 (1.9t1 ≤ t3 ≤ 2.1t1),

a divergent angle-converting element arranging in a common optical path through which light flux respectively having the wavelengths λ1, λ2 and λ3 pass and constituting movably to change a position in an optical axis direction,

an objective optical element for condensing a light flux having the wavelengths λ1, λ2 and λ3 which pass through the divergent angle-converting element from the first,second and the third light souces,onto the information recording medias,

wherein a position of the divergent angle-converting element on the occasion when light flux having the wavelength λ1 or λ2 passes through is different from a position of the divergent angle-converting element on the occasion the light flux having the wavelength λ3 passes through the divergent angle-converting element.

(2) An optical pickup apparatus comprising;

a first light source emitting light flux having a wavelength λ1 for recording and/or reproducing information for a first optical information recording medium having protective layer thickness t1,

a second light source emitting light flux having a wavelength λ2 (λ1 < λ2) for recording and/or reproducing information for a second optical information recording medium having protective layer thickness t2 (0.8t1 ≤ t2 ≤ 1.2t1),

a third light source emitting light flux having a wavelength λ3 (1.6 λ1 <- λ3 < 2λ1, λ2 < λ3) for recording and/or reproducing information for a third optical information recording medium having protective layer thickness t3 (1.9t1 ≤ t3 ≤ 2.1t1),

a divergent angle-converting element arranging in a common optical path through which the light fluxes respectively having wavelength λ1, λ2 and λ3 pass and constituting movably to change a position in an optical axis direction and emerging light fluxes having wavelength λ1 and λ2 as a parallel light,

an objective optical element for condensing the light flux having the wavelengths λ1, λ2 and λ3 which pass through the divergent angle-converting element from the first,second and the third light souces,onto the information recording media and wherein the objective optical element having an diffractive structure on an at least one optical surface,

wherein a position of the divergent angle-converting element on the occasion when light flux having the wavelength λ1 or λ2 passes through is different from a position of the divergent angle-converting element on the occasion when light flux having the wavelength λ3 passes through the divergent angle-converting element.

(3) An optical pickup apparatus comprising;

a first light source emitting a light flux having wavelength λ1 for recording and/or reproducing information for a first optical information recording medium having storage capacity S1,

a second light source emitting a light flux having wavelength λ2 (λ1 < λ2) for recording and/or reproducing information for a second optical information recording medium having storage capacity S2(S1 > S2),

a third light source emitting a light flux having wavelength λ3 (1.6 λ1 ≤ λ3 < 2λ1, λ2 < λ3) for recording and/or reproducing information for a third optical information recording medium having storage capacity S3(S2 > S3),

a divergent angle-converting element arranging in a common optical path through which light flux respectively having the wavelengths λ1, λ2 and λ3 pass and constituting movably to change a position in an optical axis direction,

an objective optical element for condensing light flux having the wavelengths λ1, λ2 and λ3 which pass through the divergent angle-converting element from the first,second and the third light souces, onto the information recording media respectively,

wherein a position of the divergent angle-converting element on the occasion when light flux having the wavelength λ1 or λ2 passes through is different from the position on the occasion light flux having the wavelength λ3 passes through the divergent angle-converting element.

(4) An optical pickup apparatus comprising;

a first light source emitting a light flux having a wavelength λ1 for reproducing and/or recording information onto a first information recording medium,

a second light source emitting light flux having a wavelength λ2 (λ1 < λ2) for reproducing and/or recording information onto a second information recording medium which is different from kind of the first information recording medium,

a third light source emitting light flux having a wavelength λ3 (λ1 ≤ λ3 < 2λ1, λ2 < λ3) for reproducing and/or recording information onto a third information recording medium which is different from kind of the first and the second information recording media,

a divergent angle-converting element arranging in a common optical path through which light flux respectively having the wavelengths λ1, λ2 and λ3 pass,

an objective optical element for condensing light flux having the wavelengths λ1, λ2 and λ3 which pass through the divergent angle-converting element from the first,second and the third light souces,onto the information recording media respectively,

wherein the divergent angle-converting element varying a position in an optical axis direction such that an optical system magnification of the divergent angle-converting element for light flux having the wavelength λ1 or λ2 emerged from the divergent angle-converting element is different from that for light flux having the wavelength λ3.

The invention itself, together with further objects and attendant advantages, will best be understood by reference to the following detailed description taken in conjunction with the accompanying drawings.

**BRIEF DESCRIPTION OF THE DRAWINGS**

Fig. 1 is a plan view of primary portions showing the structure of an optical pickup apparatus.
Fig. 2 is a plan view of primary portions showing the structure of an objective optical element.
Fig. 3 is a plan view of primary portions showing the structure of an objective optical element.
Fig. 4 is a plan view of primary portions showing the structure of another optical pickup apparatus.

(Explanation of symbols)

| | |
|---|---|
| LD | Light source |
| OBJ | Objective lens |
| PU | Optical pickup apparatus |
| RL | Information recording surface |
| OC | Divergent angle-converting element |
| L1 | First lens |
| L2 | Second lens |

In the following description, like parts are designated by like reference numbers throughout the several drawings.

**DESCRIPTION OF THE PREFERRED EMBODIMENT**

In the present specification, "chromatic aberration" means an amount of fluctuation of a position for minimum wavefront aberration in the optical axis direction for a light-converged spot on an optical information recording medium in the case of a change of a wavelength of light by +1 nm, which is expressed under the condition that the direction to become more distant is positive.

Further, "numerical aperture on an image side" means a numerical aperture (NA converted into a beam diameter) converted from a spot diameter of the light-converged spot formed on an information recording surface of an optical information recording medium.

"Divergent angle-converting element" mentioned here naturally includes an optical element that is of the structure wherein an angle of emergence may be changed for an angle of incidence of a light flux with at least one using wavelength. Therefore, it may also be one having a function to change only a diameter of the light flux without changing an angle of emergence for the light flux with another using wavelength, namely, it may be one having the function of the so-called "beam expander".

In order solve the problems as described above, the invention described in Item 1 is represented by an optical pickup apparatus having therein a first light source emitting light flux having a wavelength λ1 for recording and/or reproducing information for a first optical information recording medium having protective layer thickness t1, a second light source emitting light flux having a wavelength λ2 (λ1 < λ2) for recording and/or reproducing information for a second optical information recording medium having protective layer thickness t2 (0.8t1 ≤ t2 ≤ 1.2t1),a third light source emitting light flux having a wavelength λ3 (1.6 λ1 < λ3 < 2λ1, λ2 < λ3) for recording and/or reproducing information for a third optical information recording medium having protective layer thickness t3 (1.9t1 ≤ t3 ≤ 2.1t1), a divergent angle-converting element arranging in a common optical path through which light flux respectively having the wavelengths λ1, λ2 and λ3 pass and constituting movably to change a position in an optical axis direction,an objective optical element for condensing the light flux having the wavelengths λ1, λ2 and λ3 which pass through the divergent angle-converting element from the first,second and the third light souces,onto the information recording media respectively,wherein a position of the divergent angle-converting element on the occasion when the light flux having wavelength λ1 or λ2 passes through is different from the position on the occasion the light flux λ3 passes through the divergent angle- converting element.

In the invention described in Item 1, when an optical pickup apparatus is used, an optical system magnification of an optical lens element for the light flux with wavelength λ1 or λ2 in the case where the light flux with wavelength λ1 or λ2 passes through is made to be different from that for the light flux with wavelength λ3 in the case where the light flux with wavelength λ3 passes through, and thereby, spherical aberration caused by a difference of protective layer thickness between AOD and CD can be corrected.

The invention described in Item 2 is represented by an optical pickup apparatus having therein a first light source emitting light flux having a wavelength λ1 for recording and/or reproducing information for a first optical information recording medium having protective layer thickness t1, a second light source emitting light flux having a wavelength λ2 (λ1 < λ2) for recording and/or reproducing information for a second optical information recording medium having protective layer thickness t2 (0.8t1 ≤ t2 ≤ 1.2t1),a third light source emitting light flux having a wavelength λ3 (1.6 λ1 ≤ λ3 < 2λ1, λ2 < λ3) for recording and/or reproducing information for a third optical information recording medium having protective layer thickness t3 (1.9t1 ≤ t3 ≤ 2.1t1),a divergent angle-converting element arranging in a common optical path through which the light fluxes respectively having wavelength λ1, λ2 and λ3 pass and constituting movably to change a position in an optical axis direction and emerging light fluxes having wavelength λ1 and λ2 as a parallel light,an objective optical element for condensing the light flux having the wavelengths λ1, λ2 and λ3 which pass through the divergent angle-converting element from the first,second and the third light souces,onto the information recording media and wherein the objective optical element having an diffractive structure on an at least one optical surface,wherein the position of the divergent angle-converting element on the occasion when the light flux having wavelength λ1 or λ2 passes through is different from the position on the occasion the light flux λ3 passes through the divergent angle-converting element.

The invention described in Item 2 makes optical system magnifications of an objective optical element for light fluxes respectively with wavelengths λ1 and λ3 to be different with each other, depending on the occasion when a light flux with wavelength λ1 or λ2 passes through or on the occasion when a light flux with wavelength λ3 passes through, in the same way as in the invention described in Item 1, and thus, spherical aberration caused by a difference of protective layer thickness between AOD and CD can be corrected.

The invention described in Item 3 is represented by an optical pickup apparatus having therein a first light source emitting light flux having a wavelength λ1 for recording and/or reproducing information for a first optical information recording medium having storage capacity S1, a second light source emitting light flux having a wavelength λ2 (λ1 < λ2) for recording and/or reproducing information for a second optical information recording medium having storage capacity S2(S1 > S2),a third light source emitting a light flux having a wavelength λ3 (1.6 λ1 ≤ λ3 < 2λ1, λ2 < λ3) for recording and/or reproducing information for a third optical information recording medium having storage capacity S3 (S2 > S3),a divergent angle-converting element arranging in a common optical path through which light flux respectively having the wavelengths λ1, λ2 and λ3 pass and constituting movably to change a position in an optical axis direction, an objective optical element for condensing the light flux having the wavelengths λ1, λ2 and λ3 which pass through the divergent angle-converting element from the first,second and the third light souces,onto the information recording media,wherein the position of the divergent angle-converting element on the occasion when the light flux having wavelength λ1 or λ2 passes through is different from the position on the occasion the light flux λ3 passes through the divergent angle-converting element.

The invention described in Item 4 is represented by an optical pickup apparatus having therein a first light source emitting a light flux having wavelength λ1 for reproducing and/or recording information onto a first information recording medium,a second light source emitting light flux having a wavelength λ2 (λ1 < λ2) for reproducing and/or recording information onto a second information recording medium which is different from kind of the first information recording medium,a third light source emitting a light flux having a wavelength λ3 (λ1 ≤ λ3 < 2λ1, λ2 < λ3) for reproducing and/or recording information onto a third information recording medium which is different from kind of the first and the second information recording medium,a divergent angle-converting element arranging in a common optical path through which light flux respectively having the wavelengths λ1, λ2 and λ3 pass,an objective optical element for condensing light flux having the wavelength λ1, λ2 and λ3 which pass through the divergent angle-converting element from the first,second and the third light sources, onto information recording media respectively, wherein the divergent angle-converting element varying a position in the optical axis direction such that an optical system magnification of the divergent angle-converting element for light flux having the wavelength λ1 or λ2 emerged from the divergent angle-converting element is different from that for light flux having the wavelength λ3.

The invention described in Item 3,4 makes it possible to conduct recording/reproducing of information under the condition that aberration is properly corrected, for any of plural different types of recording media.

The invention described in Item 5 is characterized in that the divergent angle-converting element comprises a first lens and a second lens which arranged the light source side from the first lens and wherein a distance between the first lens and the second lens on the occasion when the light flux having wavelength $\lambda 1$ passes through the first and the second lenses which is different from that of on the occasion when the light flux having wavelength $\lambda 3$ passes through the first and the second lenses,in the optical pickup apparatus described in Item 1-4.

In the invention described in Item 5, by making the divergent angle-converting element to be of the two-group structure with the first and second lenses, an amount of movement of the lenses can be controlled more and the optical pickup apparatus can be made smaller, compared with an occasion where the divergent angle-converting element is of the single-lens structure.

The invention described in Item 6 is characterized in that the divergent angle-converting element emerges light flux having the wavelength $\lambda 1$ as a parallel light in the optical pickup apparatus described in Item 1-5.

The invention described in Item 7 is characterized in that the divergent angle-converting element emerges light flux having the wavelength $\lambda 1$ as a parallel light and emerges light fluxes having the wavelength $\lambda 2$ as a divergent light and emerges light flux having the wavelength $\lambda 3$ as a divergent light,by changing the position in an optical axis direction,in the optical pickup apparatus described in Item 1-6.

The invention described in Item 7 makes it possible for the light flux with wavelength $\lambda 1$ to enter the objective optical element as a parallel light, and makes it possible for the light fluxes respectively with wavelength $\lambda 2$ and wavelength $\lambda 3$ to enter the objective optical element as a divergent light, by changing the position of the divergent angle-converting element in the optical axis direction in the same way as in the invention described in Item 1. Owing to this, spherical aberration caused by a difference of protective layer thickness, especially spherical aberration caused by a difference of protective layer between AOD and CD, can be corrected. Therefore,compatibility of three kind of media with using three different wavelengths can be attained.

As well, it is desirable that DVD and CD are made to emerge from the divergent angle-converting element at the same divergent angle, but it is also possible to make them to emerge at different divergent angles.

The invention described in Item 8 is characterized in that the divergent angle-converting element emerges light flux having the wavelength $\lambda 2$ as a parallel light,in the optical pickup apparatus in Item 1-6.

The invention described in Item 8 makes it possible for the light fluxes respectively with wavelength $\lambda 1$ and wavelength $\lambda 2$ to enter the objective optical element as a parallel light, and makes it possible for the light flux with wavelength $\lambda 3$ to enter the objective optical element as a divergent light, by changing the position of the divergent angle-converting element in the optical axis direction in the same way as in the invention described in Item 1. Owing to this, spherical aberration caused by a difference of protective layer thickness, especially spherical aberration caused by a difference of protective layer between AOD and CD, can be corrected. It is preferable that a parallel light is caused to enter the objective lens for AOD and CD. The reason for this is that adjustment of PU is easy for AOD and DVD, and no problems of tracking is caused even on CD where finite light enters.

The invention described in Item 9 is characterized in that the divergent angle-converting element emerges light flux having the wavelength $\lambda 1$ as a convergent light and emerges light flux having the wavelength $\lambda 3$ as a divergent light,by changing the position in an optical axis direction, in the optical pickup apparatus in Item 1-5.

In the invention described in Item 9, in case of AOD-CD compatibility, though finite light enters the objective lens for AOD and CD, no problem is brought about even when coma aberration is caused when the objective lens is subjected to tracking, because the finite magnification is close to zero.

The invention described in Item 10 is characterized in that the divergent angle-converting element emerges light flux having the wavelength $\lambda 2$ as a parallel light,in the optical pickup apparatus in Item 9.

In the invention described in Item 10, a problem of coma aberration in the case of tracking for DVD is solved. If AOD is of the structure of emerging from the divergent angle-converting element as converge light, the diffractive structure for compatibility formed on the objective lens is not only for compatibility but is for correction of temperature characteristic of AOD, when compatibility is conducted by the objective lens.

The invention described in Item 11 is characterized in that the second light source and the third light source are packaged to be a light source unit in any one of optical pickup apparatuses in Items 1-10.

In the invention described in Item 11, uniformalization can be attained among an optical element constituting an optical system of an optical pickup apparatus, a light flux with wavelength $\lambda 2$ and a light flux with wavelength $\lambda 3$, and therefore, downsizing of the optical pickup apparatus and reduction of the number of parts can be realized.

The invention described in Item 12 is characterized in that a distance between the first lens and the second lens in the occasion where the light flux having wavelength $\lambda 3$ passes through the first and the second lenses which is obtained by moving the first lens toward the light source side in the optical pickup apparatuses in Item 5.

In an optical system in the invention described in Item 12, a difference of a magnification between a divergent angle-converting element for $\lambda 1$ and that for $\lambda 3$ is sensitive to a difference between t1 and t2.

The invention described in Item 13 is characterized in that a distance between the first lens and the second lens in the occasion where the light flux having wavelength λ3 passes through the first and the second lenses which is obtained by moving the second lens toward the objective optical element side in the optical pickup apparatus in Item 5.

In the invention described in Item 13, a difference of a magnification between a divergent angle-converting element for λ1 and that for λ3 is sensitive to a difference between t1 and t2, as a difference of magnification moves toward the light source. Also, thereby, the divergent angle-converting element itself can be compact.

The invention described in Item 14 is characterized in that at least one of the first and the second optical information recording media comprises two recording layers and an intermediate layer interposed between the two recording layers, and wherein the divergent angle-converting element corrects spherical aberration caused by a thickness of the intermediate layer, by moving the first lens toward the light source side in the optical pickup apparatus described in Item 5.

In the invention described in Item 14, the structure to move the lens that is to be moved when CD is used to correct spherical aberration caused by a difference of protective layer thickness between AOD and CD, for correcting spherical aberration caused by focus jump between layers makes it unnecessary to provide on the optical pickup apparatus the mechanism for correcting spherical aberration caused by focus jump newly, thus, downsizing of the optical pickup apparatus and reduction of the number of parts can be realized.

The invention described in Item 15 is characterized in that wherein at least one of the first and the second optical information recording media comprises two recording layers and an intermediate layer interposed between the two recording layers, and wherein the divergent angle-converting element corrects spherical aberration caused by a thickness of the intermediate layer is corrected by moving the second lens toward the objective optical element side, in the optical pickup apparatus described in Item 5.

The invention described in Item 15 makes it possible to obtain actions and effects which are the same as those of the invention described in Item 14. Even an optical system that does not correct can conduct recording and reproducing for two recording layers, but there is a possibility of unstable actions under the state where mechanical errors assumed on the actual pickup apparatus are accumulated. Therefore, if there is provided a correcting optical system as in the present invention, recording and reproducing can be conducted accurately.

The invention described in Item 16 is characterized in that a distance of movement L (mm) of the first lens or the second lens is within a range of $1 \leq L \leq 3$ in the optical pickup apparatus described in Item 5.

In the invention described in Item 16, a space for a divergent angle is small because the movement distance is small, and thereby, a pickup apparatus is made to be compact. Further, power consumption of an actuator that moves a divergent angle-converting element is reduced, which makes it possible to manufacture a power saving pickup apparatus.

The invention described in Item 17 is characterized in that a distance of movement L (mm) of the first lens in the case of correcting spherical aberration caused by a thickness of the intermediate layer is in a range of $0.1 \leq L2 \leq 0.5$ in the optical pickup apparatus described in Item 14.

In the invention described in Item 17, power consumption of an actuator that moves a divergent angle-converting element is reduced, which makes it possible to manufacture a power saving pickup apparatus.

The invention described in Item 18 is characterized in that a distance of movement L (mm) of the second lens in the case of correcting spherical aberration caused by a thickness of the intermediate layer is in a range of $0.1 \leq L2 \leq 0.5$ in the optical pickup apparatus described in Item 15.

In the invention described in Item 18, power consumption of an actuator that moves a divergent angle-converting element is reduced, which makes it possible to manufacture a power saving pickup apparatus.

The invention described in Item 19 is characterized in that the first lens has positive refracting power and the second lens has negative refracting power, in the optical pickup apparatus described in Item 5-18.

In the invention described in Item 19, a difference of magnification in a divergent angle-converting element between λ1 and λ3 is sensitive to a difference between t1 and t2 in the optical system.

The invention described in Item 20 is characterized in that a focal length t (mm) of the divergent angle-converting element for the light flux having the wavelength λ1 satisfies $25 \leq t \leq 35$, in the optical pickup apparatus described in Items 1-19.

In the invention described in Item 20, a sufficient distance from the divergent angle-converting element to the light source can be secured, and optical elements such as a beam shaper, a wave plate and a beam splitter can be arranged in the aforesaid distance.

The invention described in Item 21 is characterized in that the divergent angle-converting element is made of plastic, in the optical pickup apparatus in Items 1-20.

In the invention described in Item 21, a divergent angle-converting element that is light in weight and is low in cost can be manufactured, and a diffractive structure can be provided easily when adding another function to the divergent angle-converting element.

The invention described in Item 22 is characterized in that a diffractive structure is provided on at least one optical surface of the objective optical element, in the optical pickup apparatus described in Items 1 - 21.

In the invention described in Item 22, chromatic aberration which cannnot be followed by an actuator,for example chromatic aberration occurred by mode-hop of emitting wavelength, can be correct.Also, temperature characteristics that require frequent correction can be improved by the diffractive structure without movement of the lens element, thereby, power saving can be achieved.

The invention described in Item 23 is characterized in that the objective optical element is composed of a single lens in the optical pickup apparatus described in Items 1 - 22.

In the invention described in Item 23, a load on an actuator can be small because the objective element is light in weight and compact in size, and the invention is effective for an optical system of a slim type in which a distance from a mirror to an optical disc is required to be small.

The invention described in Item 24 is characterized in that the objective optical element is composed of a plurality of optical elements in the optical pickup apparatus described in Items 1 - 22.

In the invention described in Item 24, moldability is improved because an objective element can be composed of surfaces each having the large radius of curvature owing to the plural structure. Even in the case of providing a diffractive structure on the objective element, shading of light caused by steps of the diffractive structure can be less by forming on that surface, and decreasing of efficiency can be prevented.

The invention described in Item 25 is characterized in that wherein a focal length t2 (mm) of the objective optical element for a light flux having wavelength $\lambda 1$ satisfies $1.5 \leq t2 \leq 4.0$ in the optical pickup apparatus described in Items 1 - 24.

In the invention described in Item 25, the divergent angle-converting element that is compact and is capable of attaining sufficient compatibility is made possible. The lower limit is a distance necessary for having compatibility function, and the upper limit is a distance necessary for compactness and power saving.

The invention described in Item 26 is characterized in that a numerical aperture NA1 on an image side of the objective optical element for a light flux having wavelength $\lambda 1$ satisfies $0.63 \leq NA1 \leq 0.67$ in the optical pickup apparatus described in Items 1 - 25.

In the invention described in Item 26, an optical element suitable for recording and reproducing for AOD can be provided.

The invention described in Item 27 is characterized in that a numerical aperture NA2 on an image side of the objective optical element for a light flux with wavelength $\lambda 2$ satisfies $0.59 \leq NA2 \leq 0.67$ in the optical pickup apparatus described in Item 1-26:

In the invention described in Item 27, an optical element suitable for recording and reproducing for DVD can be provided.

The invention described in Item 28 is characterized in that numerical aperture NA3 on an image side of the objective optical element for a light flux with wavelength $\lambda 3$ satisfies $0.44 \lambda NA3 \lambda 0.55$, in the optical pickup apparatus described in Items 1 - 27.

In the invention described in Item 28, an optical element suitable for recording and reproducing for CD can be provided.

The invention described in Item 29 is characterized in that an optical system magnification of the objective optical element for a light flux having the wavelength $\lambda 3$ satisfies $- 1/10 \leq m3 \leq -1/100$, in the optical pickup apparatus described in Items 1 - 27.

The invention described in Item 29 makes the optical pickup apparatus to be one wherein aberration is less despite tracking of an objective lens.

The invention described in Item 30 is characterized in that the first information recording medium has protective layer thickness t1, the second information recording medium has protective layer thickness t2 that is different from the protective layer thickness t1, and at least one of the first information recording medium and the second information recording medium comprises two recording layers and with an intermediate layer positioned between the two recording layers, and wherein the divergent angle-converting element corrects spherical aberration caused by a thickness of the intermediate layer by moving the first lens toward the light source side,in the optical pickup apparatus described in Items 5.

The invention described in Item 30 makes it possible to obtain actions and effects which are the same as those of the invention described in Item 14.

The invention described in Item 31 is characterized in that the first information recording medium has protective layer thickness t1, the second information recording medium has protective layer thickness t2 that is different from the protective layer thickness t1, and at least one of the first information recording medium and the second information recording medium comprises two recording layers and with an intermediate layer positioned between the two recording layers, and wherein the divergent angle-converting element corrects spherical aberration caused by a thickness of the intermediate layer by moving the second lens toward the objective optical element side,in the optical pickup apparatus described in Items 5.

The invention described in Item 31 makes it possible to obtain actions and effects which are the same as those of the invention described in Item 15.

The invention described in Item 32 is characterized in that the first optical information recording medium that conducts recording and/or reproducing of information with a light flux with wavelength λ1 has the first protective layer thickness t1, the second optical information recording medium that conducts recording and/or reproducing of information with a light flux with wavelength λ2 has the second protective layer thickness t2 (0.8t1 ≤ t2 ≤ 1.2t1) and the third optical information recording medium that conducts recording and/or reproducing of information with a light flux with wavelength λ3 has the third protective layer thickness t3 (1.9t1 ≤ t3 ≤ 2.1t1), in the optical pickup apparatus described in Item 3,4.

In the invention described in Item 32, spherical aberration resulting from a difference of protective layer thickness between AOD and CD can be corrected.

Preferred embodiments for practice the present invention will be explained in detail as follows, referring to the drawings.

(First Embodiment)

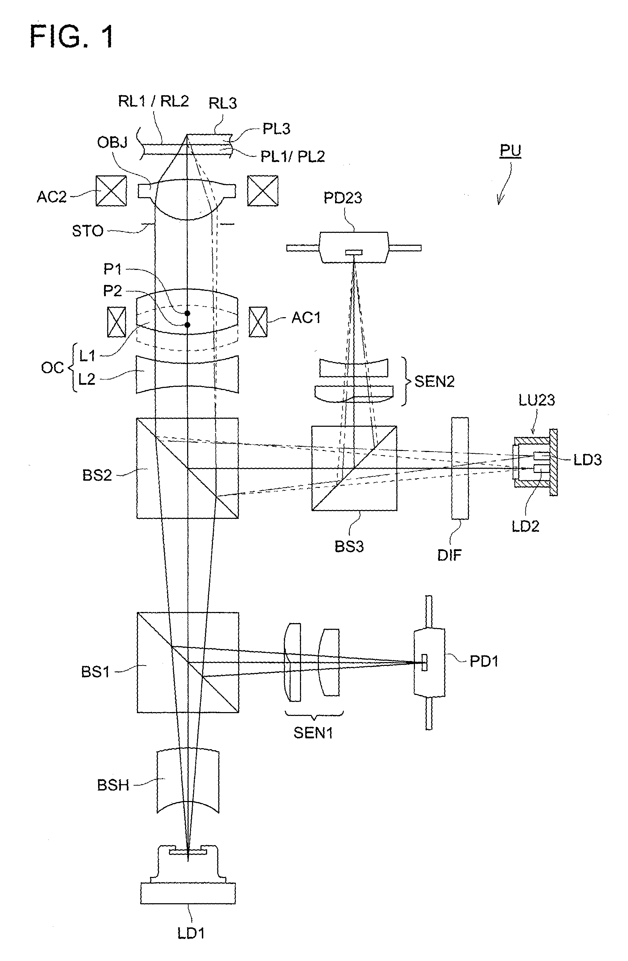

Fig. 1 is a diagram showing schematically the structure of the first optical pickup apparatus PU that can conduct recording/reproducing of information properly for any of AOD (first optical information recording medium), DVD (second optical information recording medium) and CD (third optical information recording medium). Optical specifications of AOD include wavelength λ1 = 407 nm, thickness t1 = 0.6 mm for protective layer PL1 and numerical aperture NA1 = 0.65, optical specifications of DVD include wavelength λ2 = 655 nm, thickness t2 = 0.6 mm for protective layer PL2 and numerical aperture NA2 = 0.65, and optical specifications of CD include wavelength λ3 = 785 nm, thickness t3 = 1.2 mm for protective layer PL3 and numerical aperture NA3 = 0.51. However, the combination of the wavelength, the thickness of a protective layer and the numerical aperture is not limited to the foregoing.

Optical pickup apparatus PU is composed of violet semiconductor laser LD1 (first light source) that emits a laser light flux (first light flux) with wavelength of 407 nm emitted in the case of conducting recording/reproducing of information for AOD, photodetector PD1 for the first light flux, light source unit LU23 wherein red semiconductor laser LD2 (second light source) that emits a laser light flux (second light flux) with wavelength of 655 nm emitted in the case of conducting recording/reproducing of information for DVD and red semiconductor laser LD3 (second light source) that emits a laser light flux (third light flux) with wavelength of 785 nm emitted in the case of conducting recording/reproducing of information for CD are unite solidly, photodetector PD23 in common for the second light flux and the third light flux, divergent angle-converting element OC through which the first - third light fluxes pass, objective lens (objective optical element) OBJ having a function to converge each light flux on each of information recording surfaces RL1, RL2 and RL3, the first beam splitter BS1, the second beam splitter BS2, the third beam splitter BS3, diaphragm STO, sensor lenses SEN1 and SEN2, uniaxial actuator AC1, biaxial actuator AC2, beam shaping element BSH and diffraction plate DIF which makes CD light focus on subsensor of photo detector PD23 etc.

The divergent angle-converting element OC is composed of two plastic lenses representing the first lens L1 having positive refracting power and the second lens L2 having negative refracting power both arranged in this order from the optical information recording medium side.

When the optical pickup apparatus is used, a divergent angle of each light flux is changed by changing a distance in the optical axis direction between the first lens and the second lens, by shifting a position of the first lens L1 depending on the occasion when a light flux with wavelength λ1 or λ2 passes or on the occasion when a light flux with wavelength λ3 passes, which will be explained in detail later.

Incidentally, a diffractive structure is provided on the objective lens OBJ.

When conducting recording/reproducing of information for AOD on the optical pickup apparatus PU, the uniaxial actuator AC1 is driven so that the first lens L1 may be moved up to position P1 on the optical axis. Then, the violet semiconductor laser LD1 is driven first to emit light, as its light path is drawn with solid lines in Fig. 1. A divergent light flux emitted from the violet semiconductor laser LD1 is transmitted through the beam shaping element BSH so that a shape of its section may be changed from an oval shape to a circular shape, and then, it passes through the first and second beam splitters BS1 and BS2 and through the second lens L2 and the first lens L1 to be converted into a parallel light, to arrive at the objective optical element OBJ.

Then, a diffracted light in the prescribed diffraction order number of the first light flux generated by diffracting actions of the diffractive structure of the objective optical element OBJ is converged on the information recording surface RL1 through protective layer PL1 of AOD, thus, the first light-converged spot is formed. Chromatic aberration of the first light-converged spot is kept to be within a range that is needed for reproducing and/or recording of information, and specifically, an absolute value of the chromatic aberration of the first light-converged spot is kept to be 0.15 μm/ nm or less.

Focusing and tracking are conducted for the objective optical element OBJ by the biaxial actuator AC2 arranged on the circumference of the objective optical element OBJ. A reflected light flux modulated by information pits on the information recording surface RL1 passes again the objective optical element OBJ, the first lens L1, the second lens L2 and the second beam splitter BS2, and then, is branched by the first beam splitter BS1, and is given astigmatism by the sensor lens SEN1 to be converged on a light-receiving surface of the photodetector PD1. Thus, information recorded on AOD can be read by the use of output signals of the photodetector PD1.

Even when conducting recording/reproducing of information for DVD, the uniaxial actuator AC1 is driven so that the first lens L1 may be moved up to position P1 on the optical axis, in the same way as in the occasion of conducting recording/reproducing of information for AOD.

Then, the red semiconductor laser LD2 is driven first to emit light, as its light path is drawn with dotted lines in Fig. 1. A divergent light flux emitted from red semiconductor laser LD2 passes through the third beam splitter after passing through diffraction plate DIF, then, is reflected by the second beam splitter BS2, and passes through the second lens L2 and the first lens L1 to be converted into a parallel light flux, and then, arrives at objective optical element.

Then, a diffracted light in the prescribed diffraction order number of the second light flux generated by diffracting actions of the diffractive structure of the objective optical element OBJ is converged on the information recording surface RL2 through protective layer PL2 of DVD, thus, the second light-converged spot is formed. Chromatic aberration of the second light-converged spot is kept to be within a range that is needed for reproducing and/or recording of information, and specifically, an absolute value of the chromatic aberration of the second light-converged spot is kept to be 0.25 $\mu$m/nm or less.

Focusing and tracking are conducted for the objective optical element OBJ by the biaxial actuator AC arranged on the circumference of the objective optical element OBJ. A reflected light flux modulated by information pits on the information recording surface RL2 passes again the objective optical element OBJ, the second lens L2, the first lens and is reflected by the second beam splitter BS2, and then, is branched by the third beam splitter BS3, and is given astigmatism by the sensor lens SEN2 to be converged on a light-receiving surface of the photodetector PD23. Thus, information recorded on DVD can be read by the use of output signals of the photodetector PD23.

On the other hand, when conducting recording/reproducing of information for CD, the uniaxial actuator AC1 is driven so that the first lens L1 may be moved up to position P2 on the optical axis. The first lens at this point of time is shown with dotted lines in Fig. 1. Namely, the distance between the first lens L1 and the second lens L2 in the case where the first lens L1 is located at position P2 is smaller than that between the first lens L1 and the second lens L2 in the case where the first lens 11 is located at position P1.

Then, infrared semiconductor laser LD3 is made to emit light first, as its light path is drawn with one-dot chain lines in Fig. 1. A divergent light flux emitted from the infrared semiconductor laser LD3 passes through the third beam splitter BS3, and is reflected on the second beam splitter BS2 to pass through the first lens and the second lens.

Since the position P2 of the first lens L1 on the optical axis is moved toward the light source LD1 side from the position P1 as stated above, in this case, the third light flux entering the second lens L2 as a divergent light does not emerge from the first lens L1 as a parallel light, but emerges as a divergent light whose angle of divergence is different from that in the case of entering the second lens L2, and arrives at the objective optical element OBJ.

Then, a diffracted light in the prescribed diffraction order number of the third light flux generated by diffracting actions of the diffractive structure of the objective optical element OBJ is converged on the information recording surface RL3 through protective layer PL3 of CD, thus, the third light-converged spot is formed. Chromatic aberration of this third light-converged spot is kept to be within a range that is needed for reproducing and/or recording of information.

Focusing and tracking are conducted for the objective optical element OBJ by the biaxial actuator AC arranged on the circumference of the objective optical element OBJ. A reflected light flux modulated by information pits on the information recording surface RL3 passes again the objective optical element OBJ, the second lens L2, the first lens L1 and is reflected by the second beam splitter BS2, and then, is branched by the third beam splitter BS3, and is given astigmatism by the sensor lens SEN2 to be converged on a light-receiving surface of the photodetector PD23. Thus, information recorded on CD can be read by the use of output signals of the photodetector PD23.

As stated above, spherical aberration resulting from a difference of protective layer thickness between AOD and CD is corrected by causing an optical system magnification of the objective optical element OBJ for a light flux with wavelength $\lambda$1 to be different from that of the objective optical element OBJ for a light flux with wavelength $\lambda$3 by changing the distance between the first lens L1 and the second lens L2 depending on the case of using AOD and the case of using CD.

The objective optical element OBJ is a plastic single lens of a double-aspherical surface having a function to converge the first - third light fluxes respectively on information recording surfaces RL1 - RL3 of optical discs. Incidentally, it is either possible to constitute the objective optical element by combining plural optical elements, or possible to form a diffractive structure which will be explained later on at least one of optical surfaces of the objective optical element.

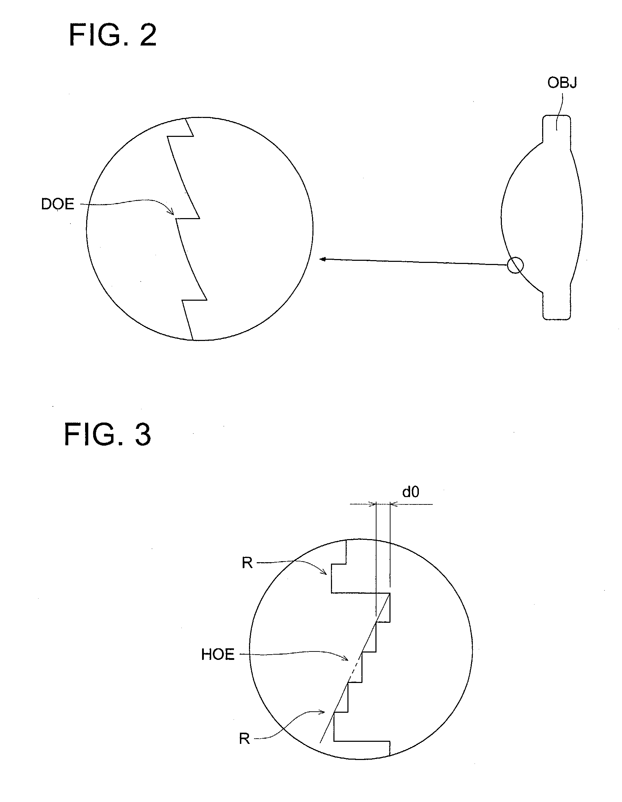

As a diffractive structure to be formed on the objective optical element OBJ, there are given, for example, diffractive structure DOE of a blazed type as shown in Fig. 2, and superposition type diffractive structure HOE wherein plural ring-shaped zones R having therein a stair-shaped structure are arranged with their centers placed on the optical axis, as shown in Fig. 3.

A structure and a method of design for an ordinary superposition type diffractive structure HOE will be explained as follows. Depth d0 per one step of the stair-shaped structure formed in each ring-shaped zone R is set to the value calculated by the expression d0 = k x $\lambda$1 / (n1 - 1) ($\mu$m), and the division number N for each ring-shaped zone R is set to 5, wherein $\lambda$1 is one wherein a wavelength of the laser light flux emitted from the violet semiconductor laser is expressed in a unit of micron ($\lambda$1 = 0.408 $\mu$m in this case), and n1 is a refractive index for wavelength $\lambda$1 of aberration correcting element L1 (n1 = 1.5242 in this case).

When a laser light flux with wavelength $\lambda$1 enters the superposition type diffractive structure HOE, an optical path difference of k x $\lambda$1 ($\mu$m) is generated between adjoining steps, and no phase difference is given substantially to the laser light flux with wavelength $\lambda$1 which, therefore, is transmitted as it is without being diffracted. Incidentally, in the following explanation, a light flux transmitted as it is without being given a phase difference substantially by the superposition type diffractive structure is called a zero-order diffracted light.

In the case of k = 2, for example, when a laser light flux with wavelength $\lambda$2 ($\lambda$2 = 0.658 $\mu$m, in this case) emitted from a red semiconductor laser enters the superposition type diffractive structure HOE, an optical path difference of d0 x (n2 - 1) - $\lambda$2 = 0.13 $\mu$m is generated between adjoining steps, and an optical path difference between 0.13 x 5 = 0.65 $\mu$m and one wavelength of wavelength $\lambda$2 is generated for one ring-shaped zone representing 1/5 of total ring-shaped zones, and therefore, wavefronts transmitted respectively through adjoining ring-shaped zones R are staggered by one wavelength to be superposed. Namely, the light flux with wavelength $\lambda$2 is made by the superposition type diffractive structure HOE to be a diffracted light that is diffracted in the direction of the first order. Incidentally, n2 represents a refractive index of aberration correcting element L2 for wavelength $\lambda$2 (n2 = 1.5064, in this case). A diffraction efficiency of the first order diffracted light of the laser light flux with wavelength $\lambda$2 in this case is 87.5% which represents a sufficient amount of light for conducting recording/reproducing of information for DVD.

When the superposition type diffractive structure HOE is formed on objective optical element OBJ, spherical aberration caused by a difference of protective layer thickness between AOD and DVD can be corrected by the function of the superposition type diffractive structure HOE.

Further, when a laser light flux with wavelength $\lambda$3 ($\lambda$3 = 0.785 $\mu$m, in this case) emitted from an infrared semiconductor laser enters the superposition type diffractive structure HOE having the aforesaid structure, an optical path difference of 1 x $\lambda$3 ($\mu$m) is generated between adjoining steps because of $\lambda$3 $\approx$ 2 x $\lambda$1, and the light flux with wavelength $\lambda$3 is not given a phase difference substantially in the same way as in the light flux with wavelength $\lambda$1, thus, it is transmitted as it is without being diffracted (zero-order diffracted light).

As stated above, the optical pickup apparatus PU shown in the present embodiment causes the light flux with wavelength $\lambda$1 to enter the objective optical element OBJ as a parallel light and causes the light flux with wavelength $\lambda$3 to enter the objective optical element OBJ as a divergent light by changing the distance in the optical axis direction between the first lens and the second lens by moving the first lens in the optical axis direction, depending on the occasion where the light flux with wavelength $\lambda$1 or $\lambda$2 passes and the occasion where the light flux with wavelength $\lambda$3 passes. Due to this, optical system magnifications for the objective optical element OBJ respectively for the light flux with wavelength 1 and the light flux with wavelength 3 are made to be different, and spherical aberration caused by a difference of protective layer thickness between AOD and CD can be corrected.

It is preferable for the optical magnification of a divergent angle-converting element to satisfy the following (1) - (3).

$$-1/100 \leq ml \leq 1/100 \tag{1}$$

$$-1/100 \leq m2 \leq 1/100 \tag{2}$$

$$1/3 \leq m3 \leq 1 \tag{3}$$

ml: Optical magnification of divergent angle-converting element for light flux with wavelength $\lambda$1
m2: Optical magnification of divergent angle-converting element for light flux with wavelength $\lambda$2
m3: Optical magnification of divergent angle-converting element for light flux with wavelength $\lambda$3

Incidentally, though the light flux with wavelength $\lambda$2 emerges from divergent angle-converting element OC as a parallel light in the present embodiment, it is also possible to employ, without being limited to the foregoing, the structure wherein the light flux with wavelength $\lambda$2 emerges as a divergent light and the structure wherein the light flux with wavelength λ2 emerges as a divergent light a converged light.

Even in this case, however, a divergent angle of the light flux with wavelength 7λ3 emerging from the divergent angle-converting element OC needs to be greater than that of the light flux with wavelength λ2, for securing the function to correct spherical aberration caused by a difference of protective layer thickness between AOD and CD.

Further, though the light source unit LU23 wherein the second light source LD2 and the third light source LD3 are packaged is employed in the present embodiment, the second light source LD2 and the third light source LD3 can be arranged separately, without being limited to the structure stated above. By using the light source unit LU23, the optical element constituting the optical system of the optical pickup apparatus PU can be used commonly by the second light flux and the third light flux, which can realize downsizing of the optical pickup apparatus PU and reduction of the number of parts.

Though the first lens L1 is moved in the optical axis direction toward a light source LD1 when using CD in the present embodiment, the first lens L1 may also be moved toward the optical information recording medium , or the second lens L2 may be moved.

For example, when using CD, the second lens L2 is moved in the optical axis direction to the optical information recording medium side. Due to this, the distance between the second lens and the first lens L1 in the case of using CD is made to be smaller than the distance between the second lens L2 and the first lens L1 in the case of using AOD and DVD.

When AOD or DVD is a multi-layer disc such as a two-layer disc structured by laminating at least a transparent protective layer, the first information recording surface, an intermediate layer and the second information recording surface, in this order from the light source side in the optical axis direction, spherical aberration resulting from a focus jump between layers in the course of recording/reproducing needs to be corrected. As a method of correcting this spherical aberration, there is given the method to change an angle of incidence of a light flux entering the objective lens OBJ.

Therefore, by employing the structure to move a lens (first lens L1 or second lens L2) to be moved in the case of using CD for correcting spherical aberration caused by a difference of protective layer thickness to correct spherical aberration resulting from the focus jump between layers, it is not necessary to provide newly the mechanism to correct spherical aberration caused by a focus jump in multi-layer disc on the optical pickup apparatus PU, which can realize downsizing of the optical pickup apparatus PU and reduction of the number of parts.

Incidentally, it is preferable that a distance of movement of the first lens or the second lens in the case of using CD is within a range of 1 mm - 3 mm.

Further, it is preferable that a distance of movement of the first lens or the second lens for correcting spherical aberration resulting from the focus jump in multi-layer disc is within a range of 0.1 mm - 0.5 mm.

The "distance of movement" mentioned here is naturally an amount of a change of the lens distance when the first or second lens is moved, which is different from an actual amount of movement of each lens.

(Second Embodiment)

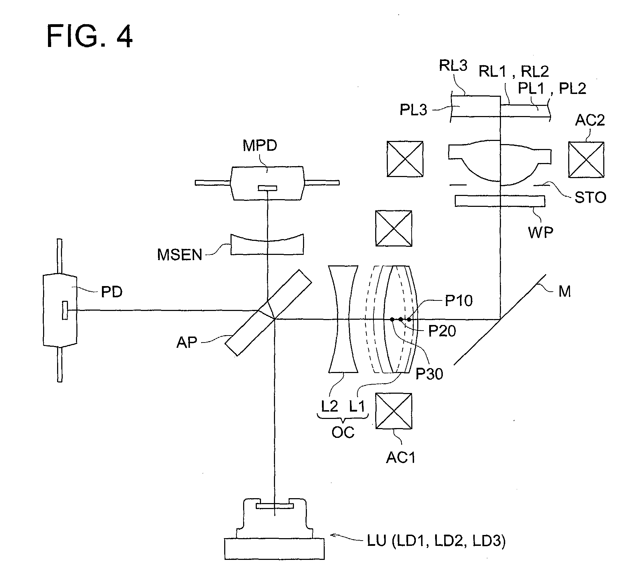

Fig. 4 is a diagram showing schematically the structure of the first optical pickup apparatus PU that can conduct recording/reproducing of information properly for any of AOD (first optical information recording medium ), DVD (second optical information recording medium) and CD (third optical information recording medium). Optical specifications of AOD include wavelength λ1 = 407 nm, thickness t1 = 0.6 mm for protective layer PL1 and numerical aperture NA1 = 0.65, optical specifications of DVD include wavelength λ2 = 655 nm, thickness t2 = 0.6 mm for protective layer PL2 and numerical aperture NA2 = 0.65, and optical specifications of CD include wavelength λ3 = 785 nm, thickness t3 = 1.2 mm for protective layer PL3 and numerical aperture NA3 = 0.51. However, the combination of the wavelength, the thickness of a protective layer and the numerical aperture is not limited to the foregoing.

Optical pickup apparatus PU is composed of light source unit LU wherein violet semiconductor laser LD1 (first light source) that emits a laser light flux (first light flux) with wavelength of 407 nm emitted in the case of conducting recording/reproducing of information for AOD, red semiconductor laser LD2 (second light source) that emits a laser light flux (second light flux) with wavelength of 655 nm emitted in the case of conducting recording/reproducing of information for DVD, and infrared semiconductor laser LD3 (third light source) that emits laser light flux (third light flux) with wavelength of 785 nm emitted in the case of conducting recording/reproducing of information for CD are all united solidly, photodetector PD commonly for the first, second and third light fluxes, divergent angle-converting element OC through which the first - third light fluxes pass, objective lens (objective optical element) OBJ having a function to converge each light flux on each of information recording surfaces RL1, RL2 and RL3, astigmatic difference plate AP causing astigmatism on light arriving at the photodetector, 1/4 wavelength plate WP that converts light into circularly polarized light, diaphragm STO, monitor sensor lens MSEN, monitor photodetector MPD, uniaxial actuator AC1 for driving OC and biaxial actuator AC2 for driving an objective lens. Incidentally, a light path for light with each wavelength is not illustrated.

The divergent angle-converting element OC is composed of two plastic lenses representing the first lens L1 having positive refracting power and the second lens L2 having negative refracting power which is arranged on the light source unit LU side from the first lens L1.one or both of the first lens L1 and the second lens L2 is made of plastic.

When the optical pickup apparatus is used, a divergent angle of each light flux is changed by changing a distance in the optical axis direction between the first lens and the second lens, by shifting a position of the first lens L1 depending on the occasion when a light flux with wavelength λ1 or λ2 passes or on the occasion when a light flux with wavelength λ3 passes, which will be explained in detail later.

Incidentally, a diffractive structure is provided on the objective lens OBJ.

When conducting recording/reproducing of information for AOD on the optical pickup apparatus PU, the uniaxial actuator AC1 is driven so that the first lens L1 may be moved up to position P1 on the optical axis.

Then, in Fig. 4, violet semiconductor laser LD1 in light source unit LU is driven to emit light. A divergent light flux emitted from the violet semiconductor laser LD1 is branched by astigmatic difference plate AP, and most rays of light thereof pass through divergent angle-converting element OC, and a part thereof takes a course to monitor sensor lens MSEN. A ray of light emitted from the divergent angle-converting element OC as divergent light is deflected by a mirror and arrives at wavelength plate WP and objective optical element OBJ. On the other hand, the ray of light which has passed through the monitor sensor lens MSEN is converged on the monitor photodetector to be used for adjustment of output of light source unit LU.

Then, a diffracted light in the prescribed diffraction order number of the first light flux generated by diffracting actions of the diffractive structure of the objective optical element OBJ is converged on the information recording surface RL1 through protective layer PL1 of AOD, thus, the first light-converged spot is formed.

Focusing and tracking are conducted for the objective optical element OBJ by the biaxial actuator AC2 arranged on the circumference of the objective optical element OBJ. A reflected light flux modulated by information pits on the information recording surface RL1 passes again the objective optical element OBJ, 1/4 wavelength plate WP, divergent angle-converting element OC and an astigmatic difference plate, and is converged on a light-receiving surface of photodetector PD. Thus, information recorded on AOD can be read by the use of output signals of the photodetector PD.

On the other hand, when conducting recording/reproducing of information for DVD, the uniaxial actuator AC1 is driven so that the first lens L1 may be moved up to position P20 on the optical axis. The first lens at this point of time is shown with one-dot chain lines in Fig. 4. Namely, the distance between the first lens L1 and the second lens L2 in the case where the first lens is located at position P20 is smaller than the distance between the first lens L1 and the second lens L2 in the case where the first lens L1 is located at position P10.

Then, as shown in Fig. 4, red semiconductor laser LD2 positioned in light source unit LU is driven to emit light. A divergent light flux emitted from the red semiconductor laser LD2 is branched by astigmatism plate AP in the same way as in the case of AOD, and most rays of light thereof pass through divergent angle-converting element OC, and a part thereof takes a course to monitor sensor lens MSEN. A ray of light emerging from the divergent angle-converting element OC as converged light is deflected by a mirror and arrives at wavelength plate WP and objective optical element OBJ. On the other hand, the ray of light which has passed through the monitor sensor lens MSEN is converged on the monitor photodetector to be used for adjustment of output of light source unit LU.

Then, a diffracted light in the prescribed diffraction order number of the second light flux generated by diffracting actions of the diffractive structure of the objective optical element OBJ is converged on the information recording surface RL2 through protective layer PL2 of DVD, thus, the second light-converged spot is formed. Chromatic aberration of this second light-converged spot is controlled to be within a range that is needed for reproducing and/or recording of information, and specifically, an absolute value of the chromatic aberration of the second light-converged spot is controlled to be 0.25 μm/nm or less.

Focusing and tracking are conducted for the objective optical element OBJ by the biaxial actuator AC2 arranged on the circumference of the objective optical element OBJ. A reflected light flux modulated by information pits on the information recording surface RL2 passes again the objective optical element OBJ, 1/4 wavelength plate WP, divergent angle-converting element OC and an astigmatic difference plate, and is converged on a light-receiving surface of photodetector PD. Thus, information recorded on DVD can be read by the use of output signals of the photodetector PD.

On the other hand, when conducting recording/reproducing of information for CD, the uniaxial actuator AC1 is driven so that the first lens L1 may be moved up to position P30 on the optical axis. The first lens at this point of time is shown with dotted lines in Fig. 4.

Namely, the distance between the first lens L1 and the second lens L2 in the case where the first lens L1 is located at position P30 is smaller than the distance between the first lens L1 and the second lens L2 in the case where the first lens L1 is located at position P20.

Then, as shown in Fig. 4, infrared semiconductor laser LD3 positioned in light source unit LU is driven to emit light. A divergent light flux emitted from the infrared semiconductor laser LD3 is branched by astigmatism plate AP in the same way as in the case of AOD, and most rays of light thereof pass through divergent angle-converting element OC, and a part thereof takes a course to monitor sensor lens MSEN. A ray of light emerging from the divergent angle-converting element OC as divergent light is deflected by a mirror and arrives at wavelength plate WP and objective optical element OBJ. On the other hand, the ray of light which has passed through the monitor sensor lens MSEN is converged on the monitor photodetector to be used for adjustment of output of light source unit LU.

Then, a diffracted light in the prescribed diffraction order number of the third light flux generated by diffracting actions of the diffractive structure of the objective optical element OBJ is converged on the information recording surface RL2 through protective layer PL3 of CD, thus, the third light-converged spot is formed. Chromatic aberration of this third light-converged spot is controlled to be within a range that is needed for reproducing and/or recording of information, and specifically, an absolute value of the chromatic aberration of the third light-converged spot is controlled to be 0.25 μm/nm or less.

Focusing and tracking are conducted for the objective optical element OBJ by the biaxial actuator AC2 arranged on the circumference of the objective optical element OBJ. A reflected light flux modulated by information pits on the information recording surface RL3 passes again the objective optical element OBJ, 1/4 wavelength plate WP, divergent angle-converting element OC and an astigmatic difference plate, and is converged on a light-receiving surface of photodetector PD. Thus, information recorded on CD can be read by the use of output signals of the photodetector PD.

As stated above, the distance between the first lens L1 and the second lens L2 are arranged so that the distance between them may be different for all occasions of using AOD, DVD and CD, and thereby, optical system magnifications of the objective optical element OBJ are made to be different for the light fluxes each having each of wavelength λ1, wavelength λ2 and wavelength λ3, which corrects spherical aberration caused by a difference of wavelength between AOD and DVD and spherical aberration caused by a difference of wavelength and of protective layer thickness between AOD and CD.

In the light source unit wherein light sources each emitting light with each wavelength are unitized, a position of a light emission point varies slightly depending on the wavelength. By changing a distance between the first lens L1 and the second lens L2, it is possible to receive light with the same photodetector even when light emission points are different.

Though the astigmatic difference plate AP may be replaced with a beam splitter, it is necessary to provide a sensor lens that converges light on a sensor, in that case.

Further, if a monitor sensor lens is changed to a hologram lens, because an amount of light received can be less for the purpose of monitoring, it can be arranged at an appropriate angle that matches a size of an optical pickup apparatus.

Though the light source unit wherein three light sources are united solidly is used in the present embodiment, it is also possible to use a two-laser one-package wherein a light source for AOD and a light source for DVD and CD which has spread generally are unitized.

The objective optical element OBJ is a plastic single lens of a double-aspherical type having a function to converge the first - third light fluxes respectively on information recording surfaces RL1 - RL3 of optical discs. Incidentally, it is either possible to constitute the objective optical element OBJ of this kind by combining plural optical elements, or possible to form the aforesaid diffractive structure on at least one optical surface.

Though the present explanation has been given with an example of AOD as the first optical information recording medium in the First and Second Embodiments, the invention is not limited to this, and can also be applied to other high density optical discs including, for example, an optical disc having image-side numerical aperture (NA) of about 0.85 and protective layer thickness of about 0.1 mm.

With respect to the specific structure for driving the divergent angle-converting element, various known methods can be employed, and its structure itself is not restricted in particular, in this case. For example, as is disclosed in TOKKAI No. 2002-373441, the structure may also be one wherein the divergent angle-converting element is driven by an actuator to the appropriate position, in accordance with distinction signals obtained by distinguishing the types of optical discs.

In the pickup apparatus equipped with a discriminating function for optical discs, for example, the divergent angle-converting element is adjusted to be at an appropriate position in accordance with disc information obtained from the discriminating means by driving the actuator mentioned above, or the collimator is driven and adjusted at the timing of emission from an appropriate laser light source in accordance with the disc information.

Lens movement in the case where the divergent angle-converting element is composed of plural lenses includes an occasion wherein either one lens is moved toward the object side or toward the optical information recording medium side so that a distance between both lenses may be changed, and an occasion wherein lenses are moved together toward the object side or toward the optical information recording medium side without while the distance between lenses is kept unchanged.

Therefore, "positions in the optical axis direction are different" in the divergent angle-converting element includes both positional movements by the above-mentioned movement. (Example 1)

An example of the optical pickup apparatus shown in the First Embodiment stated above will be explained, next.

An optical pickup apparatus of the present example is of the structure wherein the first lens L1 is moved toward the light source side when CD is used, in the same way as in the optical pickup apparatus PU shown in Fig. 1, but, it is not equipped with beam shaping element BSH.

Lens data of each optical element are shown in Table 1 and Table 2.

Table 1

Example 1 Lens data
Focal length of objective lens element    $f_1=3.0$mm    $f_2=3.10$mm    $f_3=3.12$mm
Image-side numerical aperture           NA1:0.65    NA2:0.65    NA3:0.51

| $i^{th}$ surface | ri | di (407nm) | ni (407nm) | di (655nm) | ni (655nm) | di (785nm) | ni (785nm) |
|---|---|---|---|---|---|---|---|
| 0 | | 18.6075 | | 18.30869 | | 18.30869 | |
| 1 | infinity | 3.25 | 1.529942 | 6.5 | 1.514362 | 6.5 | 1.51108 |
| 2 | infinity | 1 | 1.0 | 1 | 1.0 | 1 | 1.0 |
| 3 | infinity | 1 | 1.559806 | 1 | 1.540725 | 1 | 1.537237 |
| 4 | 6.25294 | 3 | 1.0 | 3 | 1.0 | 1 | 1.0 |
| 5 | 36.25659 | 1 | 1.559806 | 1 | 1.540725 | 1 | 1.537237 |
| 6 | −7.3348 | 5 | 1.0 | 5 | 1.0 | 7 | 1.0 |
| 7 (Aperture diameter) | $\infty$ | 0.1 ($\phi$4.07mm) | | 0.1 ($\phi$4.07mm) | | 0.1 ($\phi$4.07mm) | |
| 8 | 24.64083 | 0.50000 | 1.559806 | 0.50000 | 1.540725 | 0.50000 | 1.537237 |
| 8′ | 24.64083 | 0.00000 | 1.559806 | 0.00000 | 1.540725 | 0.00000 | 1.537237 |
| 8″ | 24.64083 | 0.00000 | 1.559806 | 0.00000 | 1.540725 | 0.00000 | 1.537237 |
| 9 | 1281.62612 | 0.05 | 1.0 | 0.05 | 1.0 | 0.05 | 1.0 |
| 10 | 1.91657 | 2.2 | 1.559806 | 2.2 | 1.540725 | 2.2 | 1.537237 |
| 11 | 362.5771 | 1.16 | | 1.24 | | 1.04 | |
| 12 | $\infty$ | 0.6 | 1.61869 | 0.6 | 1.57752 | 1.2 | 1.57063 |
| 13 | $\infty$ | | | | | | |

* The symbol di represents a displacement from $i^{th}$ surface to $(i + 1)^{th}$ surface.
* The symbols di′ and di″ represent respectively a displacement from $i^{th}$ surface to I′$^{th}$ surface and a displacement from $i^{th}$ surface to I″$^{th}$ surface.

EP 1 533 800 A2

(Table 2-1)

| Aspheric surface data Optical element | |
|---|---|
| Third surface | |
| Aspheric surface coefficient | κ -1.0000 x E+2 |
| | A2 -5.4601 x E-3 |
| | A4 -1.1061 x E-3 |
| | A6 +1.1936 x E-4 |
| | A8 -1.5745 x E-6 |
| Fourth surface | |
| Aspheric surface coefficient | κ -6.5960 x E-0 |
| | A2 -3.1231 x E-3 |
| | A4 -1.1074 x E-3 |
| | A6 +2.2556 x E-4 |
| | A8 -1.7113 x E-5 |
| Fifth surface | |
| Aspheric surface coefficient | κ +2.9561 x E-0 |
| | A2 -2.2064 x E-3 |
| | A4 -1.8408 x E-4 |
| | A6 +1.4728 x E-5 |
| | A8 -6.4263 x E-7 |
| Sixth surface | |
| Aspheric surface coefficient | κ +2.3793 x E-0 |
| | A2 -8.6964 x E-4 |
| | A4 +1.5721 x E-4 |
| | A6 +9.6871 x E-6 |
| | A8 +5.1240 x E-7 |

(Table 2-2)

| Objective optical element | |
|---|---|
| Eighth surface 0 mm $\leq$ h < 1.662 mm (AOD: 10th order DVD: 6th order CD: 5th order Blazed wavelength 1 mm) | |
| Aspheric surface coefficient | κ -2.4929 x E+1 |
| | A2 -1.5119 x E-3 |
| | A4 +3.6795 x E-4 |
| | A6 +7.4902 x E-5 |
| | A8 -1.0866 x E-5 |
| Optical path difference function | B2 -3.0581 x E-0 |
| | B4 -1.3892 x E-1 |
| | B6 +1.1519 x E-2 B8 +2.7576 x E-3 |
| | B10 -1.2445 x E-3 |

(Table 2-2)   (continued)

| Objective optical element | |
|---|---|
| 8'th surface 1.662 mm ≤ h < 1.95 mm (AOD: 5th order DVD: 3rd order Blazed wavelength 1 mm) | |
| Aspheric surface coefficient | $\kappa$ -2.4929 x E+1 |
| | A2 -1.5119 x E-3 |
| | A4 +3.6795 x E-4 |
| | A6 +7.4902 x E-5 |
| | A8 -1.0866 x E-5 |
| Optical path difference function | B2 -6.1161 x E-0 |
| | B4 -2.7785 x E-1 |
| | B6 +2.3039 x E-2 |
| | B8 +5.5152 x E-3 |
| | B10 -2.4891 x E-3 |
| 8"th surface 1.95 mm ≤ h (AOD: mm) 4th order Blazed wavelength 1 | |
| Aspheric surface coefficient | $\kappa$ -2.4929 x E+1 |
| | A2 -1.5119 x E-3 |
| | A4 +3.6795 x E-4 |
| | A6 +7.4902 x E-5 |
| | A8 -1.0866 x E-5 |
| Optical path difference function | B2 -7.6451 x E-0 |
| | B4 -3.4731 x E-1 |
| | B6 +2.8799 x E-2 |
| | B8 +6.8940 x E-3 |
| | B10 -3.1113 x E-3 |
| 9th surface | |
| Aspheric surface coefficient | $\kappa$ -1.1391 x E+18 |
| | A2 -8.2648 x E-4 |
| | A4 +3.8280 x E-4 |
| | A6 +3.6185 x E-5 |
| | A8 +1.2638 x E-6 |
| 10th surface | |
| Aspheric surface coefficient | $\kappa$ -4.0404 x E-1 |
| | A2 +2.1403 x E-3 |
| | A4 +2.5829 x E-4 |
| | A6 +3.6091 x E-5 |
| | A8 -1.7376 x E-5 |
| | A10 +1.5482 x E-5 |
| | A12 -2.3082 x E-6 |

(Table 2-2)　(continued)

| Objective optical element | |
|---|---|
| 11th surface | |
| Aspheric surface coefficient | $\kappa$ -9.7293 x E+4 |
| | A2 +2.2580 x E-2 |
| | A4 +1.7235 x E-2 |
| | A6 +1.5069 x E-2 |
| | A8 -8.8847 x E-3 |
| | A10 +2.7310 x E-3 |
| | A12 -3.3806 x E-4 |

As shown in Table 1, objective optical element OBJ of the present Example is established to have focal length f1 = 3.0 mm and image-side numerical aperture NA1 = 0.65 for wavelength $\lambda$1 = 407 nm, focal length f2 = 3.10 mm and image-side numerical aperture NA2 = 0.65 for wavelength $\lambda$2 = 655 nm and focal length f3 = 3.12 mm and image-side numerical aperture NA3 = 0.51 for wavelength $\lambda$3 = 785 nm.

The objective optical element OBJ is composed of two combined lenses (first objective lens and second objective lens), and a plane of incidence of the first objective lens is divided into three concentric-circle-shaped areas each having its center on the optical axis (8$^{th}$ surface, 8,$^{th}$ surface and 8"$^{th}$ surface in Table 1), and a blaze-shaped diffractive structure is formed on each area.

Further, in the structure, the first and second light fluxes enter the objective optical element as a parallel light, while, the third light flux enters the objective optical element as a divergent light.

Each of a plane of incidence (third surface) and a plane of emergence (fourth surface) of the first lens L1, a plane of incidence (fifth surface) and a plane of emergence (sixth surface) of the second lens L2, a plane of incidence (8$^{th}$ surface, 8'$^{th}$ surface and 8"$^{th}$ surface) and a plane of emergence (9$^{th}$ surface) of the first objective lens, and a plane of incidence (10$^{th}$ surface) and a plane of emergence (11$^{th}$ surface) of the second objective lens is formed to be an aspheric surface which is prescribed by the numerical expression wherein coefficients shown in Table 1 and Table 2 are substituted for the following expression (Numeral 1) and is symmetrical axially about optical axis L.

(Numeral 1)

Expression of aspheric surface shape

$$X(h) = \frac{(h^2 / R)}{1 + \sqrt{1 - (1 + \kappa)(h / R)^2}} + \sum_{i=0}^{9} + A_{2i} h^{2i}$$

In the expression above, X (h) represents an axis in the optical axis direction (a traveling direction of light is assumed to be positive), $\kappa$ represents a conic constant and $A_{2i}$ represents an aspheric surface coefficient.

A pitch of the diffractive ring-shaped zones is prescribed by the numerical expression wherein a coefficient shown in Table 2 is substituted for the optical path difference function of Numeral 2.

(Numeral 2)

Optical path difference function

$$\phi(h) = \left( \sum_{i=0}^{5} B_{2i} h^{2i} \right) \times n \times \lambda / \lambda B$$

In the expression above, $B_{2i}$ represents a coefficient of the optical path difference function, $\lambda$ represents a using wavelength and $\lambda B$ represents a blazed wavelength of diffraction ($\lambda B$ = 1 mm).

Next, an example of the optical pickup apparatus shown in the Second Embodiment stated above will be explained.

Table 3 shows a specific example of a divergent angle-converting element and an objective optical element which are fitted to the optical pickup apparatus shown in Fig. 4.

Table 3

Example 2 Lens data

| | 407nm | 655nm | 785nm |
|---|---|---|---|
| Magnification of total optical system | 7.71 | 7.49 | 6.74 |
| Magnification of coupling lens | -1/2.4 | -1/3.0 | 1/3.8 |
| Image-side numerical aperture | NA1:0.67 | NA2:0.65 | NA3:0.51 |

| $i^{th}$ surface | ri | di (407nm) | ni (407nm) | ri | di (655nm) | ni (655nm) | di (785nm) | ni (785nm) | Part name |
|---|---|---|---|---|---|---|---|---|---|
| 0 | | 0.5 | | | 0.5 | | 0.5 | | Light source |
| 1 | ∞ | 0.25 | 1.5299 | ∞ | 0.25 | 1.5144 | 0.25 | 1.5111 | Protective layer of light source |
| 2 | ∞ | 1.506 | 1.0 | ∞ | 3.951 | 1.0 | 3.951 | 1.0 | |
| 3 | ∞ | 3 | 1.5299 | | | | | | Beam shaper |
| 4 | ∞ | 0.5 | 1.0 | | | | | | |
| 5 | ∞ | 0.5 | 1.5299 | ∞ | 0.5 | 1.5144 | 0.5 | 1.5111 | Wavelength plate |
| 6 | ∞ | 0.5 | 1.0 | ∞ | 0.5 | 1.0 | 0.5 | 1.0 | |
| 7 | ∞ | 1.6 | 1.5299 | | 1.6 | 1.5144 | 1.6 | 1.5111 | Beam splitter |
| 8 | ∞ | 3 | 1.0 | | 3 | 1.0 | 3 | 1.0 | Divergent angle control element |
| 9 | 106.95 | 0.8 | 1.5428 | | 0.8 | 1.5292 | 0.8 | 1.5254 | |
| 10 | 3.8744 | 1.8 | 1.0 | | 1.7093 | 1.0 | 0.3 | 1.0 | |
| 11 | 5.4311 | 1 | 1.5428 | | 1 | 1.5292 | 1 | 1.5254 | |
| 12 | -5.9992 | 4 | 1.0 | | 4.0907 | 1.0 | 5.5 | 1.0 | |
| 13 (Aperture diameter) | ∞ | 0.0 (φ2.30mm) | 1.0 | | 0.0 (φ2.30mm) | 1.0 | 0.0 (φ1.95mm) | 1.0 | |
| 14 | 1.1268 | 1.00000 | 1.5428 | | 1.00000 | 1.5292 | 1.00000 | 1.5254 | Objective lens element |
| 14' | 1.1268 | 0.00000 | 1.5428 | | 1.00000 | 1.5292 | 0.00000 | 1.5254 | |
| 15 | -5.8696 | 0.759 | 1.0 | | 0.805 | 1.5775 | 0.587 | 1.0 | |
| 16 | ∞ | 0.6 | 1.6187 | | 0.6 | | 1.2 | 1.5706 | Optical information recording medium |
| 17 | ∞ | | | | | | | | |

\* The symbol di represents a displacement from $i^{th}$ surface to $(i + 1)^{th}$ surface.

\* The symbols di' and di'' represent respectively a displacement from $i^{th}$ surface to $I'^{th}$ surface and a displacement from $i^{th}$ surface to $I''^{th}$ surface.

No numerical value data are described for the beam shaper and the wavelength plate.

Table 4-1

| Divergent angle-converting element | |
|---|---|
| 9th surface | |
| Aspheric surface coefficient | κ -5.5906 E+01 |
| | A1 2.8997 E-03 |
| | A2 -1.1716 E-03 A2 -1.1 716 E - 0 3 |
| 10th surface | |
| Aspheric surface coefficient | κ -5.0110 E+00 |
| | A1 5.7774 E-03 |
| | A2 -1.3980 E-03 |
| 11th surface | |
| Aspheric surface coefficient | κ -3.9979 E+00 |
| | A1 8.3928 E-04 |
| | A2 -7.2950 E-05 7. 2 9 5 0 E - 0 5 |
| 12th surface | |
| Aspheric surface coefficient | κ -4.1970 E+00 |
| | A1 -1.3268 E-03 |
| | A2 4.2864 E-05 |

Table 4-2

| Objective optical element | |
|---|---|
| 14th surface (0mm ≤ h ≤ 0.987mm) | |
| Aspheric surface coefficient | κ -3.5439 E-01 |
| | A1 9.3103 E-04 |
| | A2 -2.2020 E-02 |
| | A3 1.9563 E-02 |
| | A4 2.1640 E-03 |
| | A5 -9.0776 E-03 |
| | A6 8.9517 E-04 |
| Optical path difference function (HD DVD: 10th order DVD :6th order CD: 5th order Manufacture wavelength 407 nm) | B2 -5.4634 E-04 |
| | B4 -5.2429 E-05 |
| | B6 -3. 6016 E-04 |
| | B8 7.4264 E-04 |
| | B10 -3.9449 E-04 |

Table 4-2   (continued)

| Objective optical element | |
|---|---|
| 14'th surface (0.987mm < h) | |
| Aspheric surface coefficient | $\kappa$ -3.5439 E-01 |
| | A1 9.3103 E-04 |
| | A2 -2.2020 E-02 |
| | A3 1.9563 E-02 |
| | A4 2.1640 E-03 |
| | A5 -9.0776 E-03 |
| | A6 8.9517 E-04 |
| Optical path difference function (HD DVD: 5th order DVD:3rd order Manufacture wavelength 407 nm) | B2 -1.0927 E-03 |
| | B4 -1.0486 E-04 |
| | B6 -7.2032 E-04 |
| | B8 1.4853 E-03 |
| | B10 -7.8897 E-04 |
| 15th surface | |
| Aspheric surface coefficient | $\kappa$ -2.8046 E+02 |
| | A1 -4.6928 E-02 |
| | A2 1.5971 E-01 |
| | A3 -1.8631 E-01 |
| | A4 1.0705 E-01 |
| | A5 -2.6542 E-02 |
| | A6 1.1769 E-03 |

Though Table 3 is different from Fig. 4 on the points that a two-laser one-package wherein a light source for AOD and a light source for DVD and CD which has spread generally are unitized is used as a light source, a beam shaper is assumed to be arranged on an optical path used exclusively for AOD and a wavelength plate for focus signals is arranged, it is possible to use the divergent angle-converting element and the objective optical element for the embodiment shown in Fig. 4.

Objective optical element OBJ of the present Example is established to have focal length f1 = 1.8 mm and image-side numerical aperture NA1 = 0.65 for wavelength $\lambda$1 = 407 nm, focal length f2 = 1.85 and image-side numerical aperture NA2 = 0.67 for wavelength $\lambda$2 = 655 nm and focal length f3 = 1.86 mm and image-side numerical aperture NA3 = 0.51 for wavelength $\lambda$3 = 785 nm. Convergent light, convergent light and divergent light of AOD, DVD and CD enter the objective optical element. The objective optical element is a plastic single lens, and a diffractive structure is provided on its total surface on the light source side. A diffractive action for light of CD on the area used for recording and reproducing for CD is different from that on an area outside the aforesaid area, and light passing through the outer area is not converged on an information recording surface. Therefore, specified numerical apertures for all rays of light are satisfied by only one diaphragm located at the light source side on the objective optical element.

Each of a plane of incidence (third surface) and a plane of emergence (fourth surface) of the first lens L1, a plane of incidence (fifth surface) and a plane of emergence (sixth surface) of the second lens L2, a plane of incidence (8th surface, 8'th surface and 8"th surface) and a plane of emergence (9th surface) of the first objective lens, and a plane of incidence (10th surface) and a plane of emergence (11th surface) of the second objective lens is formed to be an aspheric surface which is prescribed by the numerical expression wherein coefficients shown in Table 3 are substituted for the following expression (Numeral 1) and is symmetrical axially about optical axis L.

(Numeral 1)

Expression of aspheric surface shape

$$X(h) = \frac{(h^2 / R)}{1 + \sqrt{1 - (1 + \kappa)(h/R)^2}} + \sum_{i=0}^{9} + A_{2i}h^{2i}$$

In the expression above, X (h) represents an axis in the optical axis direction (a traveling direction of light is assumed to be positive), K represents a conic constant and $A_{2i}$ represents an aspheric surface coefficient.
A pitch of the diffractive ring-shaped zones is prescribed by the numerical expression wherein a coefficient shown in Table 3 is substituted for the optical path difference function of Numeral 2.

(Numeral 2)

Optical path difference function

$$\phi(h) = \left( \sum_{i=0}^{5} B_{2i}h^{2i} \right) \times n \times \lambda \Big/ \lambda B$$

In the expression above, $B_{2i}$ represents a coefficient of the optical path difference function, λ, represents a using wavelength and λB represents a blazed wavelength of diffraction (7λB = 1 mm).
Though the objective optical element does not have a function for correcting chromatic aberration of AOD, it is possible to cause the objective optical element to have the function by utilizing diffracting actions.
It is preferable that the optical magnification of the divergent angle-converting element satisfies the following expressions (4) - (6).

$$-1/2 \leq ml \leq -1/5 \qquad\qquad (4)$$

$$-2/5 \leq m2 \leq -1/100 \qquad\qquad (5)$$

$$1/100 \leq m3 \leq 1/3 \qquad\qquad (6)$$

m1: Optical magnification of divergent angle-converting element for light flux with wavelength λ1
m2: Optical magnification of divergent angle-converting element for light flux with wavelength λ2
m3: Optical magnification of divergent angle-converting element for light flux with wavelength λ3

However, even in this case, the light flux with wavelength λ3 is assumed to emerge from divergent angle-converting element OC with a divergent angle that is greater than that for the light flux with wavelength λ2, for securing a function to correct spherical aberration caused by a difference of protective layer thickness between AOD and CD.

(Effect of the invention)

The present invention makes it possible to obtain an optical pickup apparatus that has compatibility for information recording media each having a different protective layer, especially compatibility for AOD, DVD and CD, and can correct spherical aberration caused by a difference of protective layer for AOD and CD.
It is to be noted that various changes and modifications will be apparent to those skilled in the art. Therefore, unless such changes and modifications depart from the scope of the present invention, they should be construed as being included therein.

**Claims**

1. An optical pickup apparatus comprising;

a first light source emitting light flux having a wavelength λ1 for recording and/or reproducing information for a first optical information recording medium having protective layer thickness t1,

a second light source emitting light flux having a wavelength λ2 (λ1 < λ2) for recording and/or reproducing information for a second optical information recording medium having protective layer thickness t2 (0.8t1 ≤ t2 ≤ 1.2t1),

a third light source emitting light flux having a wavelength λ3 (1.6 λ1 ≤ λ3 < 2λ1, λ2 < λ3) for recording and/or reproducing information for a third optical information recording medium having protective layer thickness t3 (1.9t1 ≤ t3 ≤ 2.1t1),

a divergent angle-converting element arranged in a common optical path through which light flux respectively having the wavelengths λ1, λ2 and λ3 pass and having a movable position in an optical axis direction,

an objective optical element for condensing light flux having the wavelengths λ1, λ2 and λ3 which pass through the divergent angle-converting element from the first,second and the third light sources, onto the information recording media respectively,

wherein the position of the divergent angle-converting element on the occasion when the light flux having wavelength λ1 or λ2 passes through is different from the position on the occasion the light flux λ3 passes through the divergent angle-converting element.

2. The optical pickup apparatus according to Claim 1,

wherein the divergent angle-converting element comprises a first lens and a second lens arranged on the light source side from the first lens, and wherein a distance between the first lens and the second lens on the occasion when light flux having the wavelength λ1 passes through the first and the second lenses is different from that of on the occasion when light flux having the wavelength λ3 passes through the first and the second lenses.

3. The optical pickup apparatus according to Claim 2,

wherein the distance between the first lens and the second lens on the occasion where the light flux having wavelength λ3 passes through the first and the second lenses is obtained by moving the first lens toward the light source side.

4. The optical pickup apparatus according to Claim 2,

wherein the distance between the first lens and the second lens on the occasion where the light flux having wavelength λ3 passes through the first and the second lenses is obtained by moving the second lens toward the objective optical element side.

5. The optical pickup apparatus according to Claim 2, 3 or 4

wherein at least one of the first and the second optical information recording media comprises two recording layers and an intermediate layer interposed between the two recording layers, and wherein the divergent angle-converting element corrects spherical aberration caused by a thickness of the intermediate layer by moving the first lens toward the light source side.

6. The optical pickup apparatus according to Claim 2, 3 or 4

wherein at least one of the first and the second optical information recording media comprises two recording layers and an intermediate layer interposed between the two recording layers, and wherein the divergent angle-converting element corrects spherical aberration caused by a thickness of the intermediate layer by moving the second lens toward the objective optical element side.

7. The optical pickup apparatus according to Claim 5,

wherein a distance of movement L (mm) of the first lens is within a range of 0.1 ≤ L2 ≤ 0.5.

8. The optical pickup apparatus according to Claim 6,

wherein a distance of movement L2 (mm) of the second lens is within a range of 0.1 ≤ L2 ≤ 0.5.

9. The optical pickup apparatus according to any one of

Claims 2 to 8 wherein the first lens has a positive refracting power and the second lens has a negative refracting power.

**10.** The optical pickup apparatus according to any one of the preceding claims, wherein a focal length t (mm) of the divergent angle-converting element for the light flux having the wavelength $\lambda 1$ satisfies $25 \leq t \leq 35$.

**11.** The optical pickup apparatus according to any one of the preceding claims, wherein the divergent angle-converting element is made of plastic.

**12.** The optical pickup apparatus according to any one of the preceding claims, wherein a focal length t2 (mm) of the objective optical element for a light flux having wavelength $\lambda 1$ satisfies $1.5 \leq t2 \leq 4.0$.

**13.** The optical pickup apparatus according to any one of the preceding claims, wherein a numerical aperture NA1 on an image side of the objective optical element for a light flux having wavelength $\lambda 1$ satisfies $0.63 \leq NA1 \leq 0.67 \leq 0.67$.

**14.** The optical pickup apparatus according to any one of the preceding claims, wherein a numerical aperture NA2 on an image side of the objective optical element for a light flux with wavelength $\lambda 2$ satisfies $0.59 \leq NA2 \leq 0.67$.

**15.** The optical pickup apparatus according to any one of the preceding claims, wherein numerical aperture NA3 on an image side of the objective optical element for a light flux with wavelength $\lambda 3$ satisfies $0.44 \leq NA3 \leq 0.55$.

**16.** The optical pickup apparatus according to any one of the preceding claims, wherein a magnification of the objective optical element for a light flux having the wavelength $\lambda 3$ satisfies $-1/10 \leq m3 \leq -1/100$.

**17.** An optical pickup apparatus comprising;

a first light source emitting light flux having a wavelength $\lambda 1$ for recording and/or reproducing information for a first optical information recording medium having protective layer thickness t1,

a second light source emitting light flux having a wavelength $\lambda 2$ ($\lambda 1 < \lambda 2$) for recording and/or reproducing information for a second optical information recording medium having protective layer thickness t2 ($0.8t1 \leq t2 \leq 1.2t1$),

a third light source emitting light flux having a wavelength $\lambda 3$ ($1.6\lambda 1 \leq \lambda 3 < 2\lambda 1, \lambda 2 < \lambda 3$) for recording and/or reproducing information for a third optical information recording medium having protective layer thickness t3 ($1.9t1 \leq t3 \leq 2.1t1$),

a divergent angle-converting element arranging in a common optical path through which the light fluxes respectively having wavelength $\lambda 1, \lambda 2$ and $\lambda 3$ pass and constituting movably to change a position in an optical axis direction and emerging light fluxes having wavelength $\lambda 1$ and $\lambda 2$ as a parallel light,

an objective optical element for condensing the light flux having, the wavelengths $\lambda 1, \lambda 2$ and $\lambda 3$ which pass through the divergent angle-converting element from the first, the second and the third light souces onto the information recording media respectively and wherein the objective optical element having an diffractive structure on an at least one optical surface,

wherein a position of the divergent angle-converting element on the occasion when the light flux having wavelength $\lambda 1$ or $\lambda 2$ passes through is different from the position on the occasion the light flux $\lambda 3$ passes through the divergent angle-converting element.

**18.** An optical pickup apparatus comprising;

a first light source emitting light flux having a wavelength $\lambda 1$ for recording and/or reproducing information for a first optical information recording medium having storage capacity S1,

a second light source emitting light flux having a wavelength $\lambda 2$ ($\lambda 1 < \lambda 2$) for recording and/or reproducing information for a second optical information recording medium having storage capacity S2(S1 > S2),

a third light source emitting light flux having a wavelength $\lambda 3$ ($1.6\lambda 1 \leq \lambda 3 < 2\lambda 1, \lambda 2 < \lambda 3$) for recording and/or reproducing information for a third optical information recording medium having storage capacity S3(S2 > S3),

a divergent angle-converting element arranging in a common optical path through which light flux respectively having the wavelengths $\lambda 1, \lambda 2$ and $\lambda 3$ pass and constituting movably to change a position in an optical axis direction, an objective optical element for condensing the light flux having the wavelengths $\lambda 1, \lambda 2$ and $\lambda 3$ which pass through the divergent angle-converting element from the first,second and the third light souces,onto the information recording medias respectively,

wherein a position of the divergent angle-converting element on the occasion when light flux having the wavelength $\lambda 1$ or $\lambda 2$ passes through is different from the position on the occasion light flux having the wavelength $\lambda 3$ passes through the divergent angle-converting element.

**19.** The optical pickup apparatus according to Claim 18,

wherein the divergent angle-converting element comprises a first lens and a second lens which arranged the light source side from the first lens, and wherein a distance between the first lens and the second lens on the occasion when light flux having the wavelength $\lambda 1$ passes through the first and the second lenses which is different from that of on the occasion when light flux having the wavelength $\lambda 3$ passes through the first and the second lenses.

**20.** The optical pickup apparatus according to any one of the

preceding claims, wherein the divergent angle-converting element emerges light flux having the wavelength $\lambda 1$ as a parallel light and emerges light flux having the wavelength $\lambda 2$ as a divergent light and emerges light flux having the wavelength $\lambda 3$ as a divergent light, by changing the position in an optical axis direction.

**21.** The optical pickup apparatus according to any one of claims 1 to 19 wherein the divergent angle-converting element emerges light flux having the wavelength $\lambda 1$ as a convergent light and emerges light flux having the wavelength $\lambda 3$ as a divergent light, by changing the position in an optical axis direction.

**22.** The optical pickup apparatus according to any one of the

preceding claims, wherein the second light source and the third light source are packaged to be a light source unit.

**23.** The optical pickup apparatus according to Claim 19,

wherein the first information recording medium has protective layer thickness t1 the second information recording medium has protective layer thickness t2 that is different from the protective layer thickness t1, and at least one of the first information recording medium and the second information recording medium comprises two recording layers and with an intermediate layer positioned between the two recording layers, and wherein the divergent angle-converting element corrects spherical aberration caused by a thickness of the intermediate layer by moving the first lens toward the light source side.

**24.** The optical pickup apparatus according to Claim 19,

wherein the first information recording medium has protective layer thickness t1, the second information recording medium has protective layer thickness t2 that is different from the protective layer thickness t1, and at least one of the first information recording medium and the second information recording medium comprises two recording layers and with an intermediate layer positioned between the two recording layers, and wherein the divergent angle-converting element corrects spherical aberration caused by a thickness of the intermediate layer by moving the second lens toward the objective optical element side.

**25.** The optical pickup apparatus according to Claim 2 or 19,

wherein the distance L (mm) of movement of the first lens or the second lens is within a range of $1 \leq L \leq 3$.

**26.** The optical pickup apparatus according to any one of the

preceding claims, wherein the objective optical element comprising a diffractive structure on at least one optical surface.

**27.** The optical pickup apparatus according to any one of the

preceding claims, wherein the objective element is composed of a single lens.

**28.** The optical pickup apparatus according to any one of

claims 1 to 26, wherein the objective element is composed of a plurality of optical elements.

**29.** An optical pickup apparatus comprising;

a first light source emitting a light flux having wavelength $\lambda 1$ for reproducing and/or recording information onto a first information recording medium,

a second light source emitting light flux having a wavelength $\lambda 2$ ($\lambda 1 < \lambda 2$) for reproducing and/or recording information onto a second information recording medium which is different from kind of the first information recording medium,

a third light source emitting a light flux having a wavelength $\lambda3$ ($\lambda1 \leq \lambda3 < 2\lambda1$, $\lambda2 < \lambda3$) for reproducing and/or recording information onto a third information recording medium which is different from kind of the first and the second information recording media,

a divergent angle-converting element arranging in a common optical path through which light flux respectively having the wavelengths $\lambda1$, $\lambda2$ and $\lambda3$ pass,

an objective optical element for condensing light flux having the wavelengths $\lambda1$, $\lambda2$ and $\lambda3$ which pass through the divergent angle-converting element from the first,second and the third light souces,onto the information recording media respectively,

wherein the divergent angle-converting element varying a position in the optical axis direction such that an optical system magnification of the divergent angle-converting element for light flux having the wavelength $\lambda1$ or $\lambda2$ is different from that for light flux having the wavelength $\lambda3$.

30. The optical pickup apparatus according to Claim 18 or 29, wherein the first optical information recording medium has the first protective layer thickness t1, the second optical information recording medium has the second protective layer thickness t2 ($0.8t1 \leq t2 \leq 1.2t1$) and the third optical information recording medium has the third protective layer thickness t3 ($1.9t1 \leq t3 \leq 2.1t1$).

31. The optical pickup apparatus according to Claim 49,

wherein the divergent angle-converting element comprises a first lens and a second lens , and wherein the optical system magnification can be changed by changing the distance between the first lens and the second lens.

32. The optical system according to Claim 1, 18 or 29,

wherein the divergent angle-converting element emerges light flux having the wavelength $\leq\lambda1$ as a parallel light.

33. The optical pickup apparatus according to Claim 29,

wherein the divergent angle-converting element emerges light flux having the wavelength $\lambda1$ as a parallel light and emerges light fluxes having the wavelength $\lambda2$ as a divergent light and emerges light flux having the wavelength $\lambda3$ as a divergent light.

34. The optical pickup apparatus according to Claim 29,

wherein the divergent angle-converting element emerges light flux having the wavelength $\lambda1$ as a convergent light and emerges light flux having the wavelength $\lambda3$ as a divergent light.

35. The optical pickup apparatus according to Claim 1, 18, 21 or 29, wherein the divergent angle-converting element emerges light flux having the wavelength $\lambda2$ as a parallel light.

36. A divergent angle-converting element for use in an optical pickup apparatus as claimed in any one of the preceding claims.

# FIG. 1

FIG. 2

DOE

OBJ

FIG. 3

d0

R

HOE

R

FIG. 4